# FASCICULE DE BREVET EUROPEEN

(11) **EP 2 612 447 B1**
(45) Date de publication et mention de la délivrance du brevet: **06.07.2016**
(21) Numéro de dépôt: 11748662.1
(22) Date de dépôt: 25.08.2011
(51) Int. Cl.: H04B 5/00, H04M 1/23

(54) **SÉCURISATION D'UN DISPOSITIF DE TÉLÉCOMMUNICATION ÉQUIPÉ D'UN MODULE DE COMMUNICATION EN CHAMP PROCHE**
SICHERUNG EINER TELEKOMMUNIKATIONSVORRICHTUNG MIT EINEM NAHFELDKOMMUNIKATIONSMODUL
SECURING OF A TELECOMMUNICATION DEVICE INCLUDING A NEAR-FIELD COMMUNICATION MODULE

(30) Priorité: 31.08.2010 FR 1056913
(43) Date de publication de la demande: 10.07.2013
(73) Titulaire: Proton World International N.V., 1831 Diegem (BE)
(72) Inventeur: INGELS, Didier, B-1367 Grand-Rosiere (BE)
(74) Mandataire: Thibon, Laurent
(86) Numéro de dépôt international: PCT/EP2011/064643
(87) Numéro de publication internationale: WO 2012/028532

(56) Documents cités:
- EP-A1- 1 928 099
- EP-A1- 2 034 705
- FR-A1- 2 921 786
- FR-A1- 2 942 365
- US-A1- 2004 232 220
- SMART CARD ALLIANCE: "Security of Proximity Mobile Payments", A SMART CARD ALLIANCE CONTACTLESS AND MOBILE PAYMENTS COUNCIL WHITE PAPER, SMART CARD ALLIANCE, US, no. CPMC-09001, 1 mai 2009 (2009-05-01), pages 1-39, XP007913611,

## Description

### Domaine de l'invention

La présente invention concerne de façon générale les dispositifs mobiles de télécommunication équipés d'un circuit de communication en champ proche (NFC-Near Field Communication).

### Exposé de l'art antérieur

De plus en plus, les téléphones mobiles sont équipés d'une interface de communication en champ proche qui leur permet de combiner des fonctions de transpondeur électromagnétique avec des fonctions de téléphonie mobile. En particulier, cela adjoint au dispositif mobile de télécommunication de type assistant personnel, téléphone mobile, Smartphone, etc., des fonctions d'émulation d'un transpondeur électromagnétique, de type carte sans contact. Cela enrichit les fonctionnalités du dispositif mobile qui peut alors servir, par exemple, de porte-monnaie électronique, de système de débit ou de crédit, de dispositif de validation d'accès, de titre de transport etc.

Pour émuler le fonctionnement d'une carte à puce sans contact, le dispositif mobile de télécommunication est équipé d'un circuit intégré d'émission-réception en champ proche (CLF - ContactLess Front-End) également désigné routeur NFC. Ce routeur est équipé d'une tête d'émission-réception radiofréquence associée à une antenne à faible portée pour communiquer à la manière d'un transpondeur électromagnétique. Le routeur exploite les capacités du ou des processeurs de traitement du dispositif mobile pour les opérations de traitement et de mémorisation des données. Pour des applications de contrôle d'accès, de porte-monnaie électronique, de paiement, etc., on exploite un élément sécurisé permettant d'authentifier l'utilisateur. Cet élément sécurisé est soit intégré au dispositif mobile de télécommunication, soit contenu dans un microcircuit porté par un module d'identification d'abonné (SIM - Subscriber Identification Module), ou tout autre carte amovible, par exemple au format standard d'une carte mémoire.

Une particularité d'un tel dispositif mobile de télécommunication est qu'il est susceptible de fonctionner en mode NFC lorsqu'il est éteint ou, plus généralement, lorsque ses circuits ne sont pas alimentés par la batterie ou autre élément de fourniture d'énergie du dispositif mobile.

Dans ce cas, le routeur NFC tire l'énergie nécessaire à son fonctionnement, à la manière d'un transpondeur électromagnétique, du champ rayonné par un terminal à proximité. Il fournit alors l'alimentation nécessaire aux circuits du module de sécurité pour valider les transactions en champ proche.

Quand le dispositif est alimenté par sa batterie et que ses circuits internes fonctionnent, différents mécanismes de sécurité peuvent être mis en oeuvre, par exemple pour éviter un piratage de la carte SIM. Toutefois, lorsque le dispositif n'est alimenté que via le routeur NFC, de tels mécanismes ne peuvent pas être mis en oeuvre. Cela constitue une faiblesse d'un tel dispositif mobile de télécommunication.

Le document FR2942365 décrit un dispositif de télécommunication comportant deux sources de tension d'alimentation (une batterie et un module de communication en champ proche) susceptibles de fournir une tension d'alimentation à un module de sécurité, et un commutateur pour changer entre les deux sources, cette commutation étant déclenchée par le type d'ensemble batterie inséré dans le téléphone.

### Résumé

Un objet d'un mode de réalisation de la présente invention est de pallier tout ou partie des inconvénients des dispositifs mobiles de télécommunication associés à un module de transmission en champ proche.

Pour atteindre tout ou partie des ces objets ainsi que d'autres, on prévoit un dispositif de télécommunication comportant :
une batterie susceptible de fournir une première tension d'alimentation à des circuits du dispositif parmi lesquels au moins un module de sécurité ;
un module de communication en champ proche susceptible de fournir une deuxième tension d'alimentation au module de sécurité ; et
un circuit d'activation de la fourniture de la seconde tension d'alimentation, comportant un commutateur commandable au moins par un organe accessible depuis l'extérieur du dispositif.

Selon un mode de réalisation de la présente invention, ledit commutateur est un commutateur mécanique.

Selon un mode de réalisation de la présente invention, ledit commutateur est un commutateur électronique commandé par au moins un signal dont l'état est conditionné au moins par celui dudit organe de commande.

Selon un mode de réalisation de la présente invention, le commutateur électronique est actionnable à la fois quand le dispositif est alimenté par la première tension et quand il est alimenté par la seconde tension.

Selon un mode de réalisation de la présente invention, ledit commutateur est apte à court-circuiter deux conducteurs de fourniture de ladite seconde tension d'alimentation.

Selon un mode de réalisation de la présente invention, ledit commutateur est fermé au repos.

Selon un mode de réalisation de la présente invention, ledit commutateur est en série avec un élément de conversion courant-tension, un signal indicateur de l'état du commutateur étant prélevé au point milieu de cette association en série à destination du module de communication en champ proche.

### Brève description des dessins

Ces objets, caractéristiques et avantages, ainsi que d'autres seront exposés en détail dans la description suivante de modes de réalisation particuliers faite à titre non-limitatif en relation avec les figures jointes parmi lesquelles :
la figure 1 représente, de façon très schématique, un dispositif mobile de télécommunication du type auquel s'applique à titre d'exemple la présente invention et son système environnant ;
la figure 2 est un schéma bloc illustrant l'alimentation des circuits internes au dispositif de télécommunication ;
la figure 3 représente de façon très schématique un mode de réalisation d'un circuit de sécurisation d'un module de sécurité ;
la figure 4 représente de façon très schématique un mode de réalisation d'un dispositif mobile de télécommunication équipé du circuit de la figure 3 ;
la figure 5 est un schéma bloc d'une variante du circuit de la figure 3 ; et
la figure 6 illustre schématiquement un exemple d'échanges entre un lecteur, un routeur et un module de sécurité.

### Description détaillée

De mêmes éléments ont été désignés par de mêmes références aux différentes figures. Par souci de clarté, seuls les éléments et étapes utiles à la compréhension de l'invention ont été représentés et seront décrits. En particulier, les protocoles de codage et de communication, que ce soit pour les transmissions en champ proche ou pour les télécommunications en mode GSM, n'ont pas été détaillés, les modes de réalisation décrits étant compatibles avec les protocoles usuels. De plus, les circuits constitutifs du dispositif mobile de communication n'ont pas non plus été détaillés, les modes de réalisation décrits étant là encore compatibles avec les dispositifs usuels.

Les modes de réalisation seront décrits en relation avec un téléphone mobile. Ils s'appliquent toutefois plus généralement à tout dispositif de télécommunication adapté à un réseau mobile (par exemple, de type WiFi, Bluetooth, WiMax, etc.) et associé à un module de transmission sans contact en champ proche.

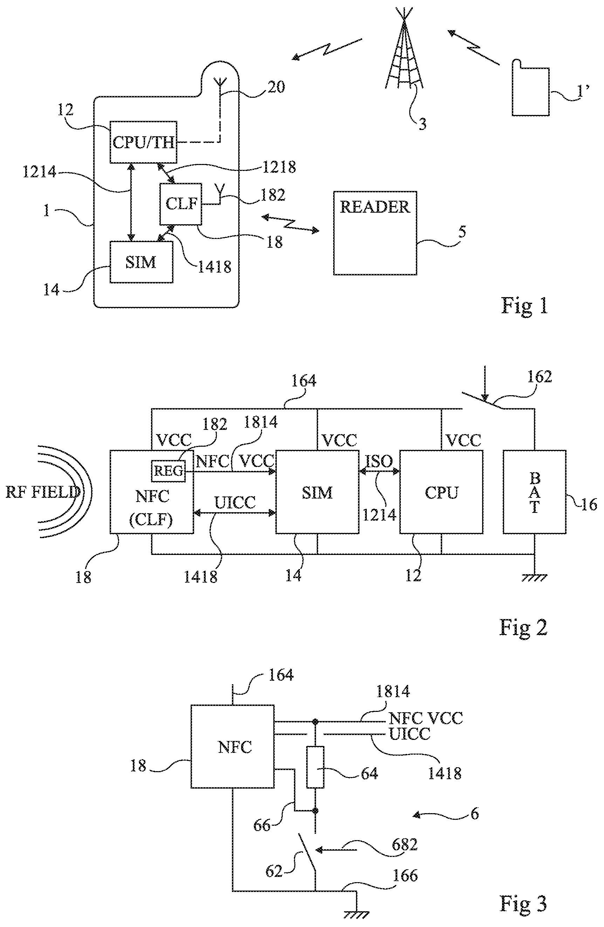

La figure 1 représente de façon très schématique un dispositif mobile de télécommunication 1 (par exemple, un téléphone portable).

Le dispositif 1 comporte une unité centrale de traitement 12 (CPU/TH) qui est constituée d'au moins un microprocesseur formant le coeur du dispositif. Ce microprocesseur est couramment désigné par son appellation anglo-saxonne Terminal Host. Pour le fonctionnement en télécommunication par l'intermédiaire d'un réseau (GSM, 3G, UMTS, etc.), ce microprocesseur exploite des informations d'identification et d'authentification fournies par un module d'identification d'abonné 14 (SIM) qui constitue un module de sécurité du dispositif. Le microprocesseur 12 est susceptible d'exploiter une ou plusieurs mémoires internes (non représentées) du téléphone. Les différents éléments d'interface avec l'utilisateur (clavier, écran, haut-parleur, etc.) n'ont pas été représentés.

Les dispositifs mobiles auxquels s'appliquent les modes de réalisation décrits combinent la fonction de télécommunication avec celle d'un système de transmission sans contact en champ proche. Pour cela, le dispositif 1 comporte un circuit 18 (CLF) constituant un module de communication en champ proche à la manière d'un transpondeur électromagnétique. Ce module 18 est associé à une antenne 182 distincte d'une antenne 20 destinée au réseau de téléphonie mobile. On désignera par les termes "routeur NFC" le module de communication en champ proche, car celui-ci intègre généralement dans un même circuit toutes les fonctions utiles à l'émulation d'une carte sans contact, mais les modes de réalisation décrits s'appliquent à tout type de module NFC.

Les différents éléments du dispositif 1 communiquent selon différents protocoles. Par exemple, les circuits 12 et 18 communiquent par une liaison 1218 de type I2C, SPI, ou autre, et la carte SIM 14 communique avec le microprocesseur 12 par une liaison 1214 conforme à la norme ISO 7816-3. Le routeur 18 communique avec la carte SIM par exemple par un bus unifilaire 1418 (SWP - Single Wire Protocol). D'autres versions de protocole et de liaison sont bien entendu possibles.

Comme l'illustre la figure 1, le dispositif 1 est susceptible de communiquer via un réseau de télécommunication (par exemple GSM) symbolisé par une antenne relais 3, par exemple avec un autre dispositif mobile 1'. En champ proche, le routeur CLF est susceptible de communiquer avec un lecteur 5 (READER), par exemple un terminal NFC ou toute autre borne de communication sans contact.

La figure 2 est un schéma bloc illustrant l'alimentation des différents circuits du dispositif mobile 1.

Le dispositif comporte généralement une batterie 16 ou une alimentation susceptible de fournir (généralement par l'intermédiaire d'un régulateur de tension non représenté) une tension VCC aux différents circuits électroniques et en particulier, au routeur NFC 18, à la carte SIM 14 (ou autre module de sécurité), à l'unité centrale 12 ainsi qu'aux autres circuits (non représentés) du dispositif (clavier, écran, etc.). Un commutateur 162 est fonctionnellement intercalé entre la batterie 16 et un rail 164 d'alimentation fournissant le potentiel VCC. Ce commutateur 162, généralement électronique, est commandé sous l'action d'un commutateur mécanique accessible par l'utilisateur depuis l'extérieur du dispositif 1.

Lorsque le dispositif mobile est éteint (commutateur 162 ouvert) ou lorsqu'il est dans un mode de fonctionnement dit faible puissance (par exemple en veille), le routeur NFC 18 reste susceptible d'extraire une tension d'alimentation d'un champ magnétique (RF FIED) rayonné par un lecteur (non représenté en figure 2) de communication en champ proche. Le routeur 18 comporte des moyens de régulation d'énergie (symbolisés par un bloc 182 - REG). Ce régulateur 182 fournit une tension d'alimentation NFC VCC aux différents circuits du routeur 18 ainsi que, par une liaison 1814, à la carte SIM 14. Cela permet au routeur d'accéder au module de sécurité pour obtenir des éléments d'authentification ou d'identification permettant de valider une transaction avec le lecteur, même quand les autres circuits du dispositif ne sont pas alimentés.

La figure 3 représente schématiquement un mode de réalisation d'un circuit 6 de sécurisation de la carte SIM lorsque le dispositif de télécommunication fonctionne en mode NFC. Ce circuit 6 est un circuit d'activation de l'alimentation de la carte SIM.

Selon ce mode de réalisation, la liaison 1814 entre le routeur 18 et le ou les modules de sécurité 14 est reliée à la masse 166 par un commutateur 62. Le rôle de ce commutateur est de tirer la liaison 1814 à la masse tant qu'une transaction n'est pas autorisée.

De préférence et comme l'illustre la figure 3, une résistance 64 est intercalée entre le commutateur 62 et la liaison 1814. Cette résistance 64 constitue un convertisseur courant-tension et le point milieu entre la résistance et le commutateur 62 est relié, par une liaison 66, à un port du routeur 18. Le signal présent sur la liaison 66 indique, par son état, l'état du commutateur 62, donc l'autorisation ou non d'un fonctionnement en champ proche. Le routeur 18 peut exploiter cette information pour valider/invalider certaines de ses fonctions internes. Par exemple, le routeur n'est autorisé à répondre à une requête du lecteur que lorsque ce signal est actif.

Le commutateur 62 est, au repos, fermé. Cela signifie que, par défaut, le module de sécurité n'est pas alimenté par le routeur 18 même si ce dernier génère une tension NFC VCC.

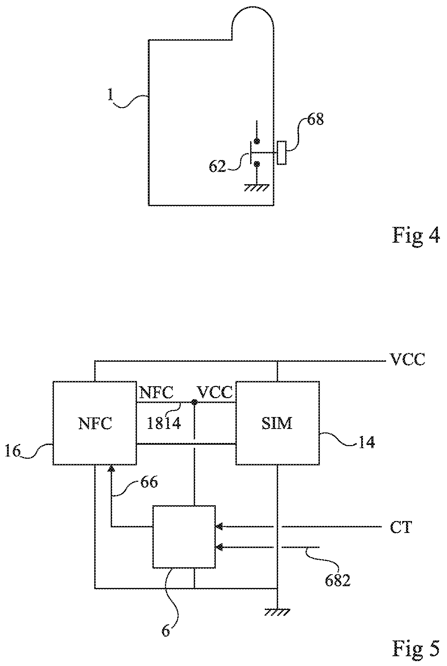

La figure 4 représente de façon schématique un dispositif 1 équipé du système de la figure 3.

Selon ce mode de réalisation, le commutateur 62 est mécanique et est actionnable par un poussoir 68 accessible depuis l'extérieur du dispositif. Par conséquent, une transaction en champ proche n'est autorisée que lorsque l'utilisateur actionne le poussoir 68.

La figure 5 représente un autre mode de réalisation selon lequel l'interrupteur 62 est un commutateur électronique. Le circuit 6 reçoit un signal 682 transmettant l'état du poussoir 68 et un signal de commande CT susceptible de provenir d'un autre élément extérieur d'autorisation quand le dispositif est alimenté par sa batterie. Ce mode de réalisation permet de tirer profit de la fonction de protection (autorisation d'une transaction en champ proche) dans tous les modes d'alimentation du dispositif. Par exemple, le signal CT est commandé, lorsque le dispositif est actif (alimenté par la batterie), par une action de l'utilisateur sur une touche du clavier ou sur une zone d'un écran tactile.

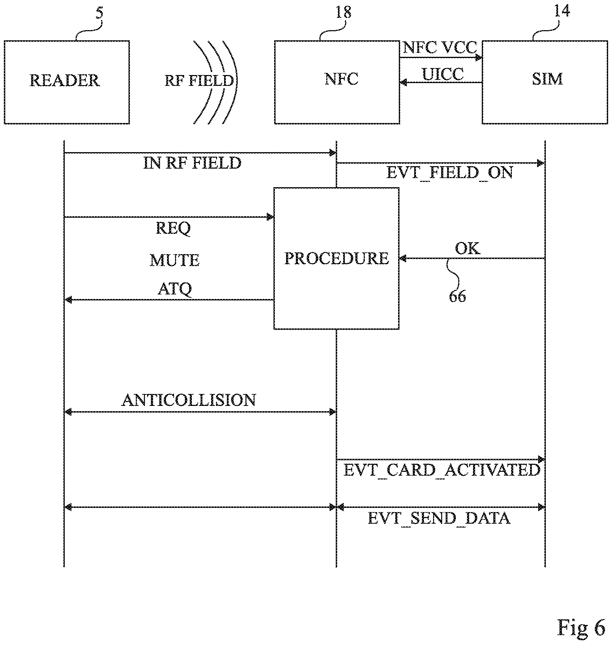

La figure 6 illustre schématiquement un exemple d'échanges entre le lecteur 5, le routeur 18 et la carte SIM.

Quand le dispositif entre dans le champ RF FIELD du lecteur et qu'il n'est pas alimenté par sa batterie, le routeur détecte la présence du champ magnétique (IN RF FIELD). Il transmet alors une commande (EVT FIELD ON) à la carte 14 indicatrice de cet événement. Le lecteur envoie périodiquement des requêtes à destination des éventuels routeurs dans son champ. Quand le routeur reçoit une requête, si l'état du signal 66 indique une autorisation (OK), le routeur répond (ATQ) au lecteur. Sinon, le routeur reste silencieux (MUTE) tant qu'une telle autorisation n'est pas reçue. Ensuite, une procédure d'anticollision est mise en oeuvre entre le lecteur et le routeur. Puis, le routeur active la carte SIM par une commande EVT_CARD_ACTIVATED. La carte et le lecteur communiquent alors (EVT_SEND_DATA) par l'intermédiaire du routeur.

Dans son mode de réalisation simplifié (sans liaison 66) la mise en oeuvre est particulièrement simple. Il suffit d'adjoindre au dispositif un commutateur court-circuitant par défaut la tension d'alimentation NFC VCC (reliant la liaison 1814 à la masse) et de prévoir un actionneur 68 accessible depuis l'extérieur du dispositif mobile.

On notera que les modes de réalisation décrits ne requièrent aucune modification de la carte SIM.

Divers modes de réalisation ont été décrits, diverses variantes et modifications apparaîtront à l'homme de l'art. Par exemple, le commutateur 62 peut être intercalé sur la liaison 1814 et est alors ouvert au repos. Toutefois, le mode de réalisation illustré par la figure 3 facilite l'extraction d'un signal d'état à destination du routeur NFC.

## Revendications

1. Dispositif de télécommunication (1) comportant :
une batterie (16) susceptible de fournir une première tension d'alimentation (VCC) à des circuits du dispositif parmi lesquels au moins un module de sécurité (14) ;
un module de communication en champ proche (18) susceptible de fournir une deuxième tension d'alimentation (NFC VCC) au module de sécurité (14) ; et
un circuit (6) d'activation de la fourniture de la seconde tension d'alimentation, comportant un commutateur (62) **caractérisé en ce que** le commutateur est commandable au moins par un organe (68) accessible depuis l'extérieur du dispositif.

2. Dispositif selon la revendication 1, dans lequel ledit commutateur est un commutateur mécanique.

3. Dispositif selon la revendication 1, dans lequel ledit commutateur est un commutateur électronique (62) commandé par au moins un signal (682) dont l'état est conditionné au moins par celui dudit organe de commande (68).

4. Dispositif selon la revendication 3, dans lequel le commutateur électronique (62) est actionnable à la fois quand le dispositif (1) est alimenté par la première tension (VCC) et quand il est alimenté par la seconde tension (NFC VCC).

5. Dispositif selon l'une quelconque des revendications 1 à 4, dans lequel ledit commutateur est apte à court-circuiter deux conducteurs (1814, 66) de fourniture de ladite seconde tension d'alimentation.

6. Dispositif selon la revendication 5, dans lequel ledit commutateur (62) est fermé au repos.

7. Dispositif selon la revendication 5 ou 6, dans lequel ledit commutateur (62) est en série avec un élément (64) de conversion courant-tension, un signal indicateur de l'état du commutateur étant prélevé au point milieu de cette association en série à destination du module de communication en champ proche (18).

## Patentansprüche

1. Eine Telekommunikationsvorrichtung (1) die folgendes aufweist:
eine Batterie (16), die in der Lage ist, eine erste Leistungsversorgungsspannung (VCC) an Schaltungen der Vorrichtung zu liefern, unter denen sich mindestens ein Sicherheitsmodul (14) befindet;
ein Nahfeldkommunikationsmodul (18), welches in der Lage ist, eine zweite Leistungsversorgungsspannung (NFC VCC) an das Sicherheitsmodul 14 zu liefern; und
eine Schaltung (6) zum aktivieren des Vorsehens der zweiten Leistungsversorgungsspannung, wobei diese Schaltung (6) einen Schalter (62) aufweist
**dadurch gekennzeichnet, dass** der erwähnte Schalter durch mindestens ein Element (68) steuerbar ist, welches von der Außenseite der Vorrichtung zugänglich ist.

2. Die Vorrichtung nach Anspruch 1, wobei der erwähnte Schalter ein mechanischer Schalter ist.

3. Die Vorrichtung nach Anspruch 1, wobei der Schalter ein elektronischer Schalter (62) ist und zwar gesteuert durch mindestens ein Signal (682) dessen Zustand mindestens durch den des erwähnten Steuerelements (68) konditioniert wird.

4. Die Vorrichtung nach Anspruch 3, wobei der elektronische Schalter (62) betätigt werden kann sowohl wenn die Vorrichtung (1) durch die erste Spannung (VCC) mit Leistung versorgt wird und wenn sie durch die zweite Spannung (NFC VCC) mit Leistung versorgt wird.

5. Die Vorrichtung nach einem der Ansprüche 1-4, wobei der Schalter in der Lage ist, zwei Leiter (1814, 66) kurzzuschließen, wobei die zwei Leiter zum Liefern der erwähnten zweiten Leistungsversorgungsspannung vorgesehen sind.

6. Die Vorrichtung nach Anspruch 5, wobei der Schalter (62) im Ruhezustand eingeschaltet ist.

7. Die Vorrichtung nach Anspruch 5 oder 6, wobei der Schalter (62) in Serie mit einem Strom-zu-Spannungswandler-Element (64) geschaltet ist, wobei ein den Zustand des Schalters anzeigendes Signal am Verbindungspunkt dieser in Serie geschalteten Komponenten erfasst wird zum Nahfeldkommunikationsmodul (18).

## Claims

1. A telecommunication device (1) comprising:
a battery (16) capable of providing a first power supply voltage (VCC) to circuits of the device, among which at least one security module (14);
a near-field communication module (18) capable of providing a second power supply voltage (NFC VCC) to the security module (14); and
a circuit (6) for activating the provision of the second power supply voltage, comprising a switch (62) **characterized in that** said switch is controllable at least by one element (68) accessible from the outside of the device.

2. The device of claim 1, wherein said switch is a mechanical switch.

3. The device of claim 1, wherein said switch is an electronic switch (62) controlled by at least one signal (682) having its state conditioned at least by that of said control element (68).

4. The device of claim 3, wherein the electronic switch (62) can be actuated both when the device (1) is powered by the first voltage (VCC) and when it is powered by the second voltage (NFC VCC).

5. The device of any of claims 1 to 4, wherein said switch is capable of short-circuiting two conductors (1814, 66) for providing said second power supply voltage.

6. The device of claim 5, wherein said switch (62) is on in the idle state.

7. The device of claim 5 or 6, wherein said switch (62) is in series with a current-to-voltage conversion element (64), a signal indicative of the state of the switch being sampled from the junction point of these components towards the near-field communication module (18).
